(19)

**Europäisches Patentamt**

**European Patent Office**

**Office européen des brevets**

(11) **EP 4 772 874 A1**

(12) **EUROPEAN PATENT APPLICATION**
published in accordance with Art. 153(4) EPC

(43) Date of publication:
08.07.2026 Bulletin 2026/28

(21) Application number: 24859122.4

(22) Date of filing: 24.06.2024

(51) International Patent Classification (IPC):
*G01N 29/48* (2006.01)  *G01M 99/00* (2011.01)

(52) Cooperative Patent Classification (CPC):
G01M 99/00; G01N 29/48

(86) International application number:
PCT/JP2024/022857

(87) International publication number:
WO 2025/047076 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.08.2023 JP 2023141001

(71) Applicant: **Hitachi, Ltd.**
**Tokyo 100-8280 (JP)**

(72) Inventor: **KITAOKA, Masanori**
**Tokyo 100-8280 (JP)**

(74) Representative: **MERH-IP Matias Erny Reichl**
**Hoffmann**
**Patentanwälte PartG mbB**
**Paul-Heyse-Straße 29**
**80336 München (DE)**

(54) **REMAINING SERVICE LIFE PREDICTING DEVICE AND REMAINING SERVICE LIFE PREDICTING METHOD**

(57) To perform a remaining service life prediction with high accuracy, includes: a simulation processing unit (102) that simulates a signal strength with respect to an inspection condition that may be a cause of variability of a defect detection signal by non-destructive inspection and a defect condition that is a condition of a defect that is a target of the non-destructive inspection; a probability distribution estimating unit (104) that estimates, based on a result of analysis by the simulation processing unit (102) and an actual signal strength that is a signal strength of a response signal obtained by actual inspection, a probability distribution relating to the defect condition estimated from the actual signal strength; and a remaining service life predicting unit (105) that calculates a temporal change of the probability distribution relating to the defect condition estimated by the probability distribution estimating unit (104), estimates, as a remaining service life, time at which an overlapping part of the probability distribution relating to the defect condition after a predetermined period of time and a predetermined fracture probability distribution of an inspection target satisfies a predetermined condition, and outputs the estimated remaining service life to an output unit.

[FIG. 1]

Description

TECHNICAL FIELD

The present invention relates to a technology of a remaining service life predicting device and a remaining service life predicting method.

BACKGROUND ART

At the time of operating social infrastructure equipment, represented by power generation plants, railroad trucks, and the like, a non-destructive inspection such as an ultrasonic inspection may be performed to inspect whether a defect has been generated in a component. In a case where a defect is discovered by the inspection, it is common practice to temporarily halt the operation in order to perform repair.

However, rather than suspending operation to perform a repair every time a defect is discovered by an inspection, it is more efficient to perform repairs of a plurality of portions simultaneously during a scheduled operational shutdown, such as at a regular inspection. To do this, it is necessary to predict a remaining service life of a monitoring target based on a defect, evaluate a risk of the discovered defect, and thus ensure that an operation may be continued until the next operational downtime.

To address such an issue, Patent Literature 1, for example, discloses a plant inspection method "including: a step of performing inspection of an evaluation target portion by an inspection method set for each of combinations of a type of the evaluation target portion, including at least one of a circumferential welded portion or a longitudinal welded portion of a pipe, or a nozzle stub welded portion, and a thickness of the evaluation target portion; and a step of selecting a measurement item for additional measurement for obtaining a parameter necessary for improving accuracy of remaining service life evaluation of the evaluation target portion, which is performed based on a result of the inspection on the evaluation target portion by the inspection method" (see claim 1).

In addition, Patent Literature 2 discloses probabilistic fatigue life prediction using ultrasonic inspection data considering EIFS uncertainty, in which "a method for probabilistically predicting fatigue life in materials includes: a step (41) of sampling a random variable for an actual equivalent initial flaw size (EIFS); a step (42) of generating random variables for parameters (In C, m) of a fatigue crack growth equation from a multivariate distribution; and a step (43) of solving the fatigue crack growth equation using these random variables. The recorded EIFS data is obtained by a step of ultrasonically scanning a target object; a step of recording echo signals from the target object; and a step of converting echo signal amplitudes to equivalent reflector sizes using previously recorded values from a scanned calibration block. The equivalent reflector sizes comprise the recorded EIFS data." (see Abstract)

CITATION LIST

Patent Literature

[Patent Literature 1] JP7125266B2
[Patent Literature 2] JP2015-512526A

SUMMARY OF INVENTION

Technical Problem

The technology described in Patent Literature 1 needs to be improved in that the technology requires additional measurement for improving accuracy. In the technology described in Patent Literature 2, since an actual flaw detection signal varies due to properties of a defect, such as defect shape and orientation, in addition to an inspection condition, it is necessary to consider that the remaining service life prediction becomes uncertain.

In view of such backgrounds, the present invention has been made, and an object of the present invention is to perform remaining service life prediction with high accuracy.

Solution to Problem

To achieve the above-described object, the present invention includes a simulation processing unit, a probability distribution estimating unit, and a remaining service life predicting unit. The simulation processing unit is configured to simulate a signal strength with respect to an inspection condition that may be a cause of variability of a defect detection signal by non-destructive inspection and a defect condition that is a condition of a defect that is a target of the non-destructive inspection. The probability distribution estimating unit is configured to estimate, based on a result of analysis by the simulation processing unit and an actual signal strength that is a signal strength of a response signal obtained by actual inspection, a probability distribution relating to the defect condition estimated from the actual signal strength. The remaining service life predicting unit is configured to: calculate a temporal change of the probability distribution relating to the defect condition estimated by the probability distribution estimating unit; estimate, as a remaining service life, time at which an overlapping part of the probability distribution relating to the defect condition after a predetermined period of time and a predetermined fracture probability distribution of an inspection target satisfies a predetermined condition; and output the estimated remaining service life to an output unit.

Another solution will be described in the embodiment as appropriate.

**Advantageous Effects of Invention**

According to the present invention, remaining service life prediction with high accuracy may be performed.

**BRIEF DESCRIPTION OF DRAWINGS**

[FIG. 1] FIG. 1 is a functional block diagram showing a configuration of a remaining service life predicting device according to a present embodiment.

[FIG. 2] FIG. 2 is a diagram showing a hardware configuration of the remaining service life predicting device according to the present embodiment.

[FIG. 3] FIG. 3 is a conceptual diagram showing an example of a non-destructive inspection system which is performed in the present embodiment.

[FIG. 4A] FIG. 4A is a conceptual diagram (part 1) showing an example of propagation analysis by a simulation processing unit.

[FIG. 4B] FIG. 4B is a conceptual diagram (part 2) showing an example of propagation analysis by the simulation processing unit.

[FIG. 5] FIG. 5 is a diagram showing an example of a result of analysis by the simulation processing unit.

[FIG. 6A] FIG. 6A is a conceptual diagram (part 1) showing an example of a defect shape model calculated in the simulation processing unit, which is used in the present embodiment.

[FIG. 6B] FIG. 6B is a conceptual diagram (part 2) showing an example of a defect shape model calculated in the simulation processing unit, which is used in the present embodiment.

[FIG. 6C] FIG. 6C is a conceptual diagram (part 3) showing an example of a defect shape model calculated in the simulation processing unit, which is used in the present embodiment.

[FIG. 7A] FIG. 7A is a conceptual diagram (part 1) showing an example of a reflected wave of a defect shape model by the simulation processing unit.

[FIG. 7B] FIG. 7B is a conceptual diagram (part 2) showing an example of a reflected wave of a defect shape model by the simulation processing unit.

[FIG. 7C] FIG. 7C is a conceptual diagram (part 3) showing an example of a reflected wave of a defect shape model by the simulation processing unit.

[FIG. 8] FIG. 8 is a conceptual diagram showing an example of a response signal to be inputted into a response signal input unit, which is used in the present embodiment.

[FIG. 9] FIG. 9 is a conceptual diagram showing a method for estimating a defect condition probability distribution of a probability distribution estimating unit, which is used in the present embodiment.

[FIG. 10] FIG. 10 is a conceptual diagram showing a result of estimating a probability distribution by the probability distribution estimating unit according to the present embodiment which considers a defect size and a defect direction.

[FIG. 11] FIG. 11 is a conceptual diagram showing a change of a probability distribution of a defect size over time and a remaining service life predicting method.

[FIG. 12] FIG. 12 is a flowchart showing a procedure of the remaining service life predicting method according to a first embodiment.

[FIG. 13] FIG. 13 is a diagram showing an example of a display screen.

[FIG. 14] FIG. 14 is a flowchart showing a procedure of a remaining service life predicting method according to a second embodiment.

## DESCRIPTION OF EMBODIMENTS

Hereinafter, embodiments of the present invention will be described by using the drawings. Note that in the drawings, the same components are denoted by the same signs, and detailed descriptions of overlapping portions will be omitted.

[First Embodiment]

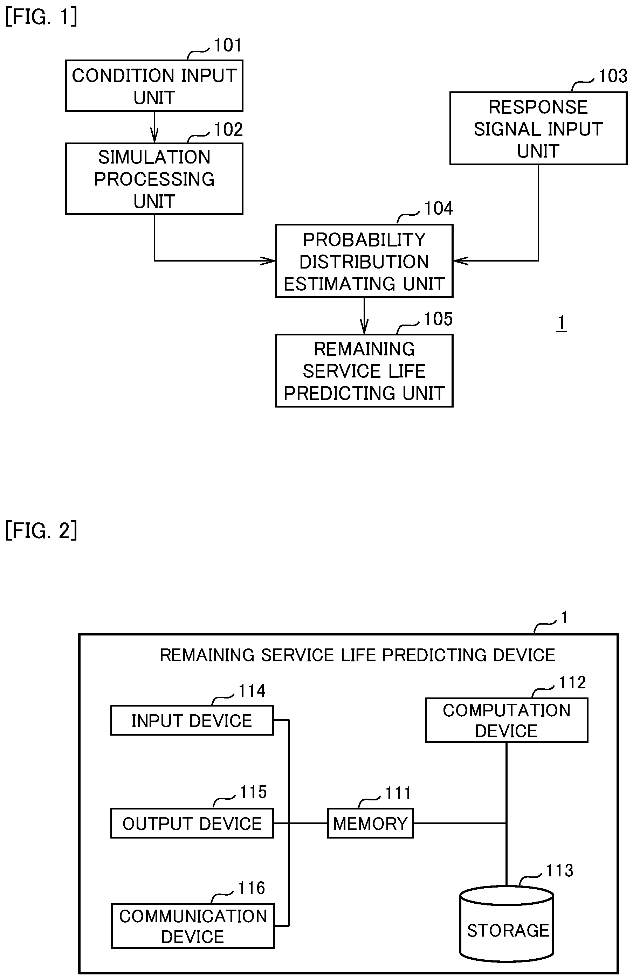

First, a first embodiment of the present invention will be described with reference to FIG. 1 to FIG. 12.

<Remaining Service Life Predicting Device 1>

FIG. 1 is a functional block diagram showing a configuration of a remaining service life predicting device 1 according to a present embodiment.

As shown in FIG. 1, the remaining service life predicting device 1 includes a condition input unit 101, a simulation processing unit 102, a response signal input unit 103, a probability distribution estimating unit 104, and a remaining service life predicting unit 105. Details of processing performed by the condition input unit 101 to the remaining service life predicting unit 105 will be described later.

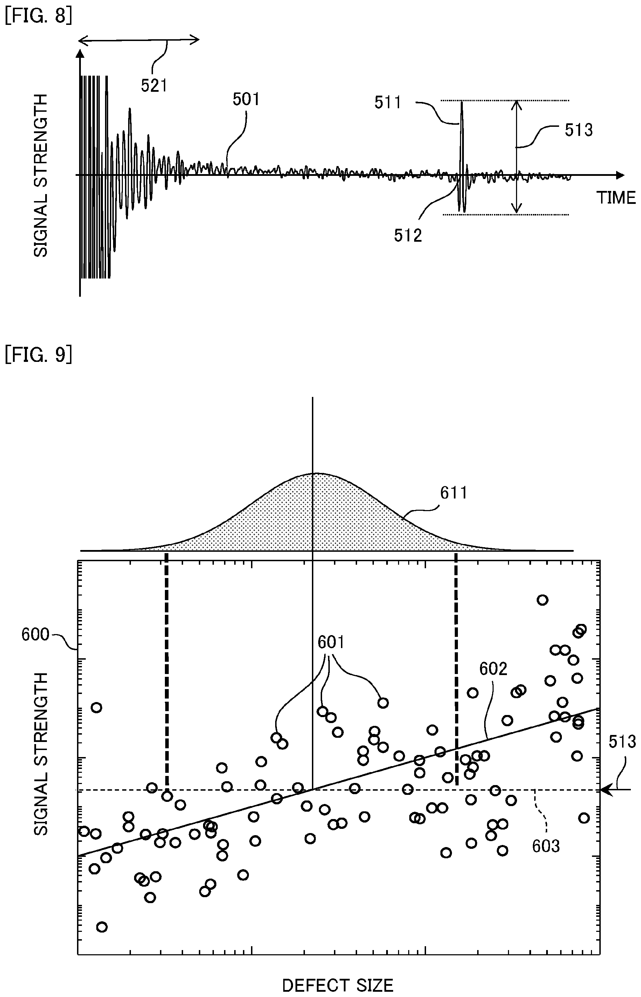

The condition input unit 101 is input with an inspection condition that may be a cause of variability of a defect detection signal 511 (see FIG. 8) of non-destructive inspection, a defect condition, and the like.

The simulation processing unit 102 simulates a signal strength with respect to the inspection condition and the defect condition that is a condition of a defect D, which is a target of non-destructive inspection and is generated in an inspection target T.

The response signal input unit 103 is input with a response signal 501 (see FIG. 8) obtained by actual inspection.

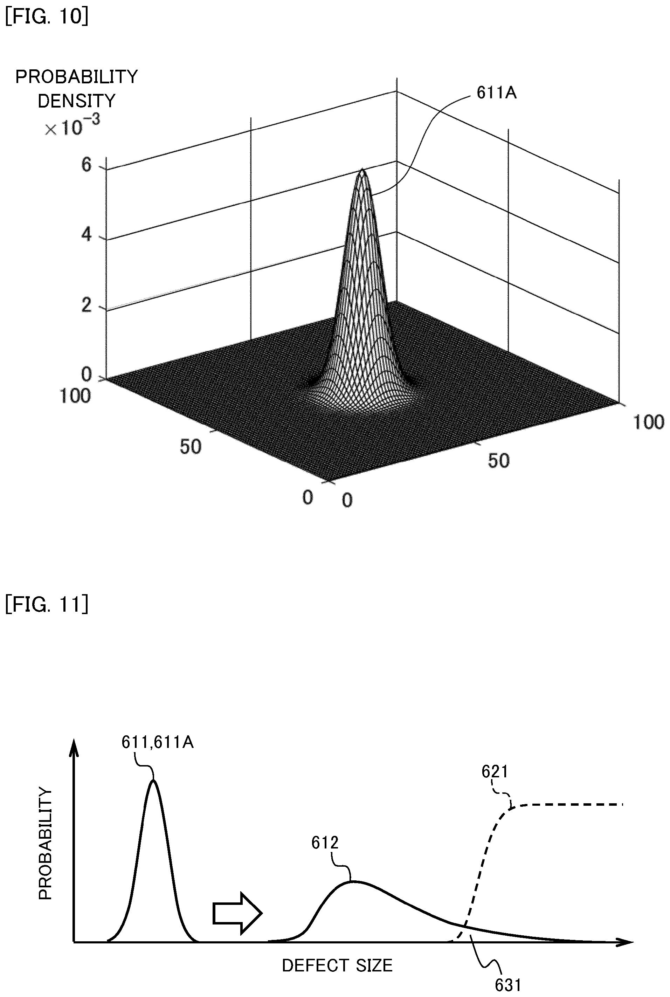

The probability distribution estimating unit 104 estimates a probability distribution relating to the defect condition by combining a result by the simulation processing unit 102 and a defect detection signal strength 513 (see FIG. 8) input into the response signal input unit 103. The defect detection signal strength 513 is based on the response signal 501. The probability distribution relating to the defect condition is output as a defect condition probability distribution 611 shown in FIG. 9 or a multi-dimensional defect condition probability distribution 611A shown in FIG. 10.

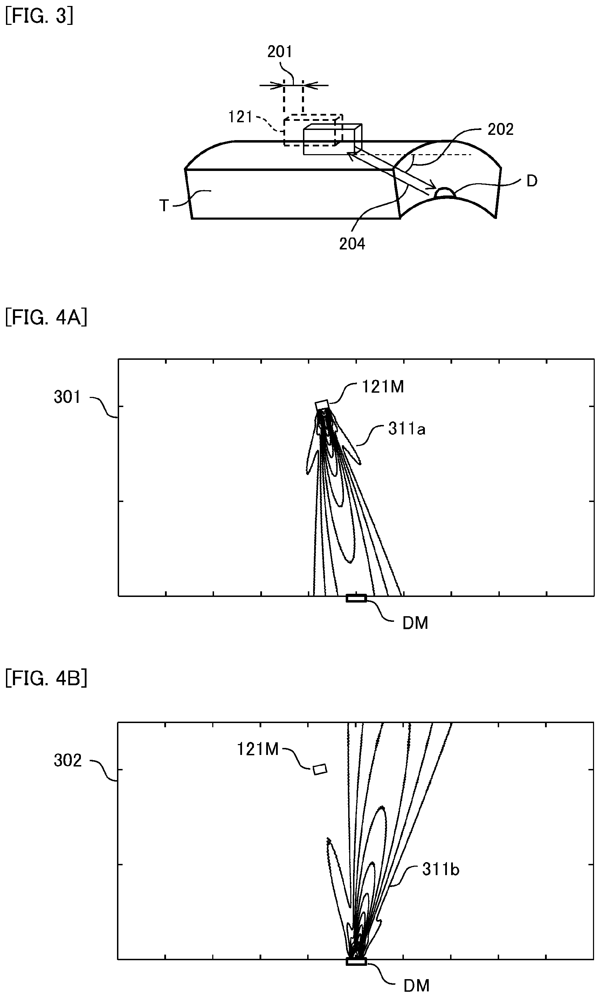

The remaining service life predicting unit 105 predicts a remaining service life (estimates a remaining service life) of the inspection target T (see FIG. 3) based on the defect condition probability distribution 611 (or the multi-dimensional defect condition probability distribution 611A), and outputs the predicted remaining service life to an output device 115 (see FIG. 2).

<Hardware Configuration Diagram>

FIG. 2 is a diagram showing a hardware configuration of the remaining service life predicting device 1 according to the present embodiment.

The remaining service life predicting device 1 includes a memory 111 configured to include a random access memory (RAM) or the like. In addition, the remaining service life predicting device 1 includes a computation device 112 configured to include a central processing unit (CPU), a graphics processing unit (GPU), or the like. Further, the remaining service life predicting device 1 includes a storage 113 configured to include a hard disk drive (HDD), a solid state drive (SSD), a read only memory (ROM), or the like.

Further, the remaining service life predicting device 1 includes an input device 114 configured to include a keyboard, a mouse, or the like, an output device 115 which is an output unit configured to include a display or the like, and a communication device 116.

A program stored in the storage 113 is loaded onto the memory 111. The loaded program is executed by the computation device 112. In this way, the simulation processing unit 102, the probability distribution estimating unit 104, and the remaining service life predicting unit 105 shown in FIG. 1 are implemented. The condition input unit 101 and the response signal input unit 103 of FIG. 1 correspond to the input device 114.

In this way, the remaining service life predicting device 1 of the present embodiment is implemented on a computer, which includes hardware resources such as the CPU, ROM, RAM, and HDD, as an information processing device using software.

<Inspection Condition>

Next, the inspection condition to be inputted into the condition input unit 101 will be described with reference to FIG. 3.

FIG. 3 is a conceptual diagram showing an example of a non-destructive inspection system that is performed in the present embodiment.

Although in the present embodiment, ultrasonic testing in particular will be described as an example of the non-destructive inspection, another non-destructive inspection method, for example, eddy-current flow detection or radiographic testing, may similarly be applied to the present embodiment.

FIG. 3 schematically shows inspection of detecting a defect D inside an inspection target T by using an ultrasonic sensor 121. As described above, the condition input unit 101 is inputted with the inspection condition, the defect condition, and a material condition. The inspection condition includes those described below.

(A1) Variability of a placement position of the ultrasonic sensor 121 (placement position variability 201). (A2) Variability of a transmission direction of an ultrasonic wave (transmission direction variability 202).

The inspection condition includes at least one of the placement position variability 201 or the transmission direction variability 202. Note that the inspection condition is not limited to the above-described (A1) and (A2). An item of the inspection condition such as (A1) or (A2) is input into the condition input unit 101 as a probability distribution. Further, the condition input unit 101 is also input with the material condition and a tolerable risk (a tolerable failure probability). The tolerable risk is used to perform prediction of a remaining service life by the remaining service life predicting unit 105. The defect condition, which will be described later, relates to variability of a size or the like of the defect D. The material condition is variability of a material constant such as an acoustic speed of the inspection target T.

<Processing of Simulation Processing Unit 102>

Next, the simulation processing unit 102 will be described with reference to FIG. 4A to FIG. 7C. FIG. 3 will be referred to as appropriate.

(Propagation Analysis)

FIG. 4A and FIG. 4B are conceptual diagrams showing an example of propagation analysis performed by the simulation processing unit 102. FIG. 4A is a diagram showing a strength distribution of an incident wave 311a by an ultrasonic sensor model 121M, and FIG. 4B is a diagram showing a strength distribution of a reflected wave 311b by the ultrasonic sensor model 121M. The diagrams shown in FIG. 4A and FIG. 4B show propagations of the incident wave 311a and the reflected wave 311b by physical simulation. The ultrasonic sensor model 121M is a model of the ultrasonic sensor 121 (see FIG. 3) used in the physical simulation.

FIG. 4A shows a propagation analysis result 301 indicating how a defect model DM is irradiated with the incident wave 311a from the ultrasonic sensor model 121M. FIG. 4B shows a propagation analysis result 302 indicating how the reflected wave 311b is reflected from the defect model DM. The defect model DM is a model of the defect D, which is set in the physical simulation.

The simulation processing unit 102 identifies positions (placeable positions) at which the ultrasonic sensor 121 may be placed from a shape of the inspection target T. Then, for each of the identified, placeable positions of the ultrasonic sensor 121, the simulation processing unit 102 executes the propagation analysis on the defect D added in accordance with an allocated probability distribution. The allocated probability distribution is a probability distribution based on variability relating to the inspection condition. From the reflected wave 311b, the simulation processing unit 102 calculates a strength (a signal strength) of a response signal 501 (see FIG. 8) which is received by the ultrasonic sensor 121. The propagation analysis by the simulation processing unit 102 may be achieved by using a general physical simulation approach or data analysis approach.

(Result of Analysis)

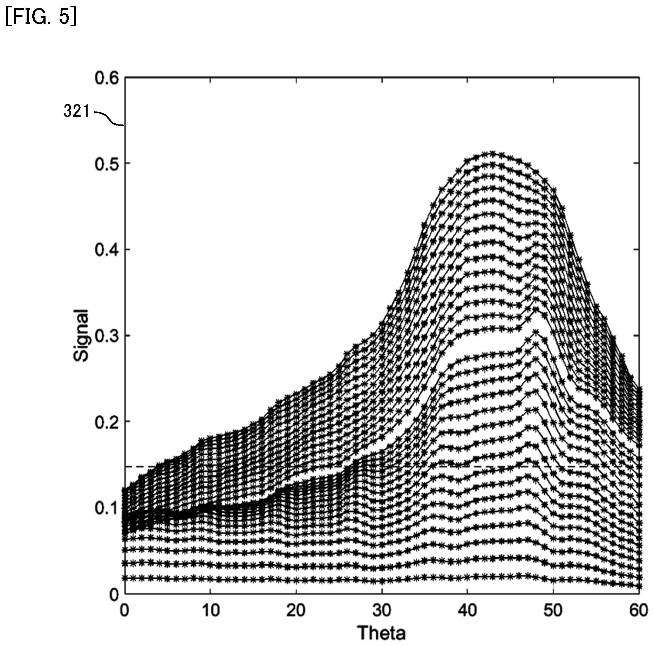

FIG. 5 is a diagram showing an example of a result of analysis by the simulation processing unit 102. FIG. 3 will be referred to as appropriate.

In a graph 321 shown in FIG. 5, the horizontal axis indicates an ultrasonic wave transmission direction (Theta), and the vertical axis indicates a signal strength. In addition, FIG. 5 shows curves corresponding to different defect sizes, with the defect size increasing progressively for curves from a lower side to an upper side of the sheet. That is, each curve shown in the graph 321 of FIG. 5 indicates an angular dependency of the signal strength for each defect size. FIG. 5 indicates that the strongest signal strength may be obtained in a case where an ultrasonic wave is transmitted and received in a direction of 45 degrees.

By an approach similar to the example shown in FIG. 5, dependency of a signal strength on the placement position variability 201 shown in FIG. 3, a material condition such as the acoustic velocity of the inspection target T, or a defect condition such as variability of the defect size may be examined. In this case, physical simulation is used like in the example shown in FIG. 5.

(Defect Shape)

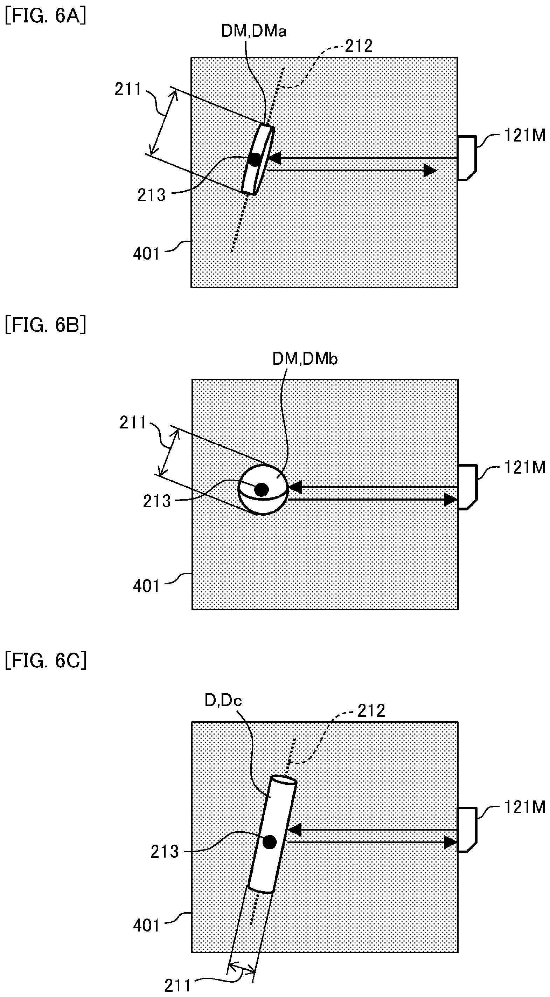

FIG. 6A to FIG. 6C are conceptual diagrams showing examples of defect models DM calculated in the simulation processing unit 102, which are used in the present embodiment.

FIG. 6A shows a planar defect model DMa, FIG. 6B shows a spherical defect model DMb, and a FIG. 6C shows a cylindrical defect model DMc as examples. When performing the analysis by the simulation processing unit 102, the simulation processing unit 102 sets a defect model DM of a designated size at a designated angle at a designated position inside an inspection target model 401. Note that the inspection target model 401 is a physical simulation model of the inspection target T (see FIG. 3). Then, the simulation processing unit 102 emits an ultrasonic wave from the ultrasonic sensor model 121M and analyzes how the ultrasonic wave is reflected by the defect model DM in the physical simulation.

In addition, FIG. 6A to FIG. 6C show variability of the defect size (defect size variability 211), variability of a defect direction (defect direction variability 212), and variability of a defect position (defect position variability 213), which form the defect condition. The planar defect model DMa, the spherical defect model DMb, and the cylindrical defect model DMc shown by the defect models DMa to DMc indicate variability of a defect shape. Such defect condition is set in the storage 113 in advance.

However, for the spherical defect model DMb shown in FIG. 6B, a defect direction may not be defined, and thus, the defect direction variability 212 is not shown.

The defect condition includes the defect size variability 211 and at least one of the defect direction variability 212, the defect position variability 213, or the variability of the defect shape.

(Reflected Wave 311b of Each Defect Model DM)

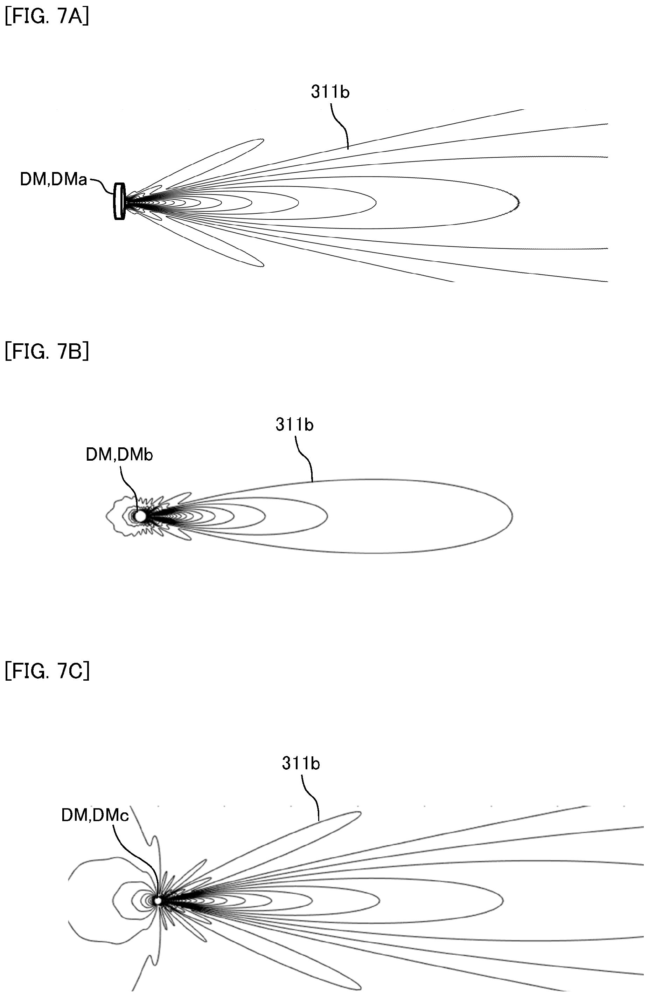

FIG. 7A to FIG. 7C are conceptual diagrams showing examples of reflected waves 311b of defect models DM by the simulation processing unit 102.

FIG. 7A to FIG. 7C show examples of a planar defect model DM (FIG. 7A), a spherical defect model DMb (FIG. 7B), and a cylindrical defect model DMc (FIG. 7C) as defect models DM, similarly to FIG. 6A to FIG. 6C.

Note that the reflected waves 311b show how an ultrasonic wave propagates in physical simulation, similarly to FIG. 4A and FIG. 4B. For a representative defect model DM like the planar, spherical, or cylindrical defect model DM, the reflected wave 311b is stored inside the remaining service life predicting device 1 (for example, in the storage 113 shown in FIG. 2). Alternatively, the user selects, via an interface, the reflected wave 311b of a representative shape like the planar, spherical, or cylindrical defect model DM from a list of reflected waves 311b. For a reflected wave 311b of a defect model DM that is not on the list, the user inputs a mathematical formula or a precalculated result via the interface. Alternatively, an existence probability may be set for each shape of the defect D so that the simulation processing unit 102 may select the shape of the defect D (any of the defect models DMa to DMc) in accordance with this existence probability. The existence probabilities of these defect models DM may be held in a database, which is not shown, or the storage 113. The existence probability of the defect model DM may vary in accordance with a property of the inspection target T.

In this way, processing by the simulation processing unit 102 may be performed by using the physical simulation. On the other hand, when past inspection data, calibration data, or comprehensive test data for the defect condition is available regarding the propagation of the ultrasonic wave, such data may be stored in the database (not shown), the storage 113, or the like. Then, the simulation processing unit 102 may refer to the past inspection data, the calibration data, or the comprehensive test data for the defect condition, which is stored in the database (not shown), the storage 113, or the like, as necessary. The physical simulation may be replaced with such past inspection data, calibration data, or test data. In this way, analysis that takes the shape of the defect D into consideration may be performed.

(Response Signal 501)

Next, the response signal input unit 103 will be described by using FIG. 8.

FIG. 8 is a conceptual diagram showing an example of the response signal 501 to be input into the response signal input unit 103, which is used in the present embodiment. FIG. 3 will be referred to as appropriate.

As shown in FIG. 8, by actual inspection, the response signal 501 which temporally changes may be obtained. Note that the response signal 501 is a signal from the actual inspection using the ultrasonic sensor 121. From the response signal 501, a defect detection signal 511 and a defect detection time 512 according to a defect condition may be obtained. Note that the defect detection signal 511 is a signal based on response characteristics from the defect D, and a defect detection signal strength 513 is a signal strength of the defect detection signal 511. That is, the defect detection signal strength 513 corresponds to an actual signal strength, which is a signal strength of the response signal 501 obtained by the actual inspection. Note that although in a section 521, a strong signal strength of the response signal 501 is obtained, this is a signal derived from vibration of the ultrasonic sensor 121 itself.

As described above, the defect detection signal 511 and the defect detection time 512 include uncertainty that depends on the inspection condition and the defect condition. For this reason, the defect detection signal 511 and the defect detection time 512 may not be uniquely associated with each defect condition.

(Estimation of Defect Condition Probability Distribution)

Next, processing to be performed by the probability distribution estimating unit 104 will be described by using FIG. 9 and FIG. 10. FIG. 1 and FIG. 8 will be referred to as appropriate.

FIG. 9 is a conceptual diagram showing a method for estimating a defect condition probability distribution 611 relating to the defect size, of the probability distribution estimating unit 104, which is used in the present embodiment.

In a graph 600, the horizontal axis indicates a defect size, and the vertical axis indicates a signal strength. Note that the graph 600 uses logarithmic scales in the horizontal axis and the vertical axis. Plot points 601 in the graph 600 are results of analysis by the simulation processing unit 102. That is, the plot points 601 are results of physical simulation analysis by performing random sampling in accordance with a probability distribution representing the defect condition (in the example shown in FIG. 9, the defect size variability 211 [see FIG. 6A to FIG. 6C]). The probability distribution representing the defect size variability 211 is the graph 321 shown in FIG. 5.

In this way, the simulation processing unit 102 simulates a signal strength with respect to an inspection condition, which may be a cause of variability in a defect detection signal 511 by non-destructive inspection, and a defect condition, which is a condition of a defect D that is a target of the non-destructive inspection. More specifically, the simulation processing unit 102 executes physical simulation to calculate a signal strength corresponding to the inspection condition and the defect condition. The simulation processing unit 102 simulates (calculates) a signal strength with respect to the inspection condition and the defect condition by referring to the graph 321 of FIG. 5. The results of simulation by the simulation processing unit 102, that is, signal strengths corresponding to the inspection condition and the defect condition are plotted as the plot points 601.

A regression line 602 is a result of applying a least-squares method to the plot points 601. A horizontal dashed line 603 shown in the graph 600 corresponds to the defect detection signal strength 513 of the defect detection signal 511 shown in FIG. 8. The plot points 601 and the regression line 602 shown in FIG. 9 indicate that the larger the defect size is, the larger the signal strength derived from the defect D is.

The probability distribution estimating unit 104 calculates a defect condition probability distribution 611 that is a probability distribution relating to the defect size (a probability distribution relating to the defect condition) from the graph 600 of FIG. 9. A distribution shape of the defect condition probability distribution 611 is presumed to follow a Weibull distribution or the like. Note that the Weibull distribution includes a normal distribution and a log-normal distribution. Further, the probability distribution estimating unit 104 calculates the defect condition probability distribution 611 by fitting parameters of the defect condition probability distribution 611 in such a manner as to best reproduce the plot points 601 by a maximum likelihood estimation method or the like. The parameters are an average and a variance, or the like. Alternatively, the probability distribution estimating unit 104 may calculate the defect condition probability distribution 611 as an empirical distribution by converting the results of the plot points 601 to a histogram.

In the present embodiment, the probability distribution estimating unit 104 calculates a histogram of the plot points 601 located on the horizontal dashed line 603 (or more precisely, on or near the horizontal dashed line 603) corresponding to the defect detection signal strength 513 obtained by the actual inspection. More specifically, the probability distribution estimating unit 104 divides a region near the horizontal dashed line 603 into grids of predetermined interval, and expresses the numbers of the plot points 601 contained in the respective grids as a histogram. The probability distribution estimating unit 104 sets the calculated histogram as the defect condition probability distribution 611. In the example shown in FIG. 9, the number of the plot points 601 is small in order to make the drawing easier to view. However, in actuality, a large number of the plot points 601 exists.

In the calculated defect condition probability distribution 611, an average of defect sizes indicated by the plot points 601 on (or near) the horizontal dashed line 603 and an average of the defect condition probability distribution 611 coincide with each other. In the present embodiment, the defect size corresponding to a point at which the regression line 602 and the horizontal dashed line 603 intersect becomes the average of the defect condition probability distribution 611 (a vertical solid line). The calculated defect condition probability distribution 611 has a spread corresponding to the defect condition (in the example shown in FIG. 9, the defect size variability 211). In the present embodiment, a degree of variability (standard deviation) of the plot points 601 on (or near) the horizontal dashed line 603 depends on the defect condition (in the example of FIG. 9, the defect size variability 211). Vertical dashed lines of FIG. 9 indicate $2\sigma$ of the defect condition probability distribution 611, and indicate the defect size variability 211.

The defect condition probability distribution 611 thus obtained is input into the remaining service life predicting unit 105 as an initial distribution.

FIG. 9 shows an example in which the defect condition probability distribution 611 is calculated by using the variability of the plot points 601 as the defect size variability 211. The actual response signal 501 (see FIG. 8) varies also due to defect conditions as shown in (C1) to (C2) below in addition to the defect size variability 211. (C1) A defect shape.

(C2) A defect direction variability 212 (see FIG. 6).

For this reason, it is necessary to consider that the remaining service life prediction becomes uncertain due to defect conditions other than the defect size variability 211. That is, in addition to the defect size variability 211, the probability distribution estimating unit 104 performs processing that is similar to the processing shown in FIG. 9 for each of the defect shape and the defect direction variability 212. As a result, the defect condition probability distribution 611 is calculated for each of the defect conditions such as the defect shape and the defect direction variability 212.

Note that the processing shown in FIG. 9 is a Bayesian inference which uses the distribution of the plot points 601 as a prior distribution and estimates the defect condition probability distribution 611 as a posterior distribution in the case where the defect detection signal strength 513 is given as data. That is, the probability distribution estimating unit 104 estimates the probability distribution relating to the defect condition by the Bayesian inference based on a result of the physical simulation and an inputted signal strength obtained by actual inspection. As described above, the result of the physical simulation corresponds to the plot points 601, and the inputted signal strength obtained by the actual inspection corresponds to the defect detection signal strength 513. In this way, estimation accuracy of the defect condition probability distribution 611 may be improved.

As described above, the probability distribution estimating unit 104 estimates the defect condition probability distribution 611 which is a probability density of a defect condition estimated from an actual signal strength. At this time, the probability distribution estimating unit 104 estimates the defect condition probability distribution 611 based on the result of analysis by the simulation processing unit 102 and the actual signal strength (defect detection signal strength 513), which is the signal strength of the response signal 501 obtained by the actual inspection.

FIG. 10 is a conceptual diagram showing a result of estimating a probability distribution by the probability distribution estimating unit 104 according to the present embodiment, that takes into account the defect size variability 211 (see FIG. 6A to FIG. 6C) and the defect direction variability 212 (see FIG. 6A to FIG. 6C).

FIG. 10 shows a multi-dimensional defect condition probability distribution 611A in which a defect direction is added to random variables in addition to a defect size as a representative example. That is, the multi-dimensional defect condition probability distribution 611A shown in FIG. 10 is obtained by adding a defect direction as a random variable to the defect condition probability distribution 611 shown in FIG. 9. In FIG. 10, one of the horizontal axes indicates a defect size, the other horizontal axis indicates a defect direction, and the vertical axis indicates a probability. That is, FIG. 10 shows a result obtained by the probability distribution estimating unit 104 performing the processing (the Bayesian inference) shown in FIG. 9 on each of the defect size and the defect direction and combining these. In the example shown in FIG. 10, the shown multi-dimensional defect condition probability distribution 611A is an example in which the defect size and the defect direction are independent from each other. However, the defect size and the defect direction may correlate.

The probability distribution estimating unit 104 presumes a distribution shape of the multi-dimensional defect condition probability distribution 611A shown in FIG. 10 with respect to the result of analysis of the simulation processing unit 102. Then, the probability distribution estimating unit 104 fits parameters in such a manner as to best reproduce plot points 601 (see FIG. 9) by a maximum likelihood estimation method or the like. Alternatively, the probability distribution estimating unit 104 may convert results of the respective plot points 601 of the defect size and the defect direction to a histogram as shown in FIG. 9. In this way, the probability distribution estimating unit 104 may calculate the multi-dimensional defect condition probability distribution 611A shown in FIG. 10 as an empirical distribution.

The multi-dimensional defect condition probability distribution 611A thus calculated is such that averages of the random variables with respect to the result of the physical simulation performed on the defect size and the defect direction and averages of the random variables in the multi-dimensional defect condition probability distribution 611A coincide with each other. The result of the physical simulation corresponds to a result of plotting the plot points 601 shown in FIG. 9 with respect to the defect size and the defect direction. Further, the multi-dimensional defect condition probability distribution 611A has spreads corresponding to the defect size variability 211 and the defect direction variability 212. Based on the multi-dimensional defect condition probability distribution 611A obtained in this way, the remaining service life predicting unit 105 calculates growth of the defect D and evaluates a risk.

As described above, FIG. 10 shows the multi-dimensional defect condition probability distribution 611A whose random variables include the defect size and the defect direction. A multi-dimensional defect condition probability distribution 611A whose random variables include a defect position or the like besides the defect size and the defect direction may be estimated.

In addition, a defect shape is also considered in the multi-dimensional defect condition probability distribution 611A. Regarding the defect shape, the defect shape may be designated by the user as described above, or may be probabilistically processed as follows. Since the defect shape takes a discrete value, a probability of occurrence for each of the planar defect model DMa, the spherical defect model DMb, and the cylindrical defect model DMc, shown in FIG. 7A to FIG. 7C, is calculated. Then, the probability distribution estimating unit 104 associates the multi-dimensional defect condition probability distribution 611A with each of the planar, spherical, and cylindrical defect models DM. That is, for example, when the probability of occurrence of a planar defect D is "0.4", the multi-dimensional defect condition probability distribution 611A that is associated with the planar defect model DMa will occur with a probability of "0.4".

Note that the defect condition probability distribution 611 shown in FIG. 9 is a special form of the defect condition probability distribution 611A shown in FIG. 10.

(Remaining Service Life Prediction Processing)

FIG. 11 is a conceptual diagram showing a change of the defect condition probability distribution 611 over time and a remaining service life predicting method.

In a graph shown in FIG. 11, the horizontal axis indicates a defect size, and the vertical axis indicates a probability. The defect condition probability distribution 611 is the defect condition probability distribution 611 that is relating to the defect size and estimated by the probability distribution estimating unit 104 in FIG. 9 (or the multi-dimensional defect condition probability distribution 611A shown in FIG. 10). Hereinafter, for the sake of simplicity of description, the description will be made by using the defect condition probability distribution 611 relating to the defect size shown in FIG. 9.

A curve 612 is a probability distribution relating to a defect condition (a defect size in the example shown in FIG. 11) after an elapse of time t. In FIG. 11, an open arrow indicates the elapse of time. A specific procedure of calculating a probability distribution relating to a defect condition after the elapse of time t will be described later. A curve 621 is a fracture probability distribution of an inspection target T with respect to the defect size. A fracture probability indicates a fracture probability of the inspection target T with respect to a certain defect size. For example, when the defect size is "x1", the inspection target T is broken with a probability of "p1" which is calculated from the fracture probability distribution. Note that the curve 621 may be obtained by a calculation approach such as a finite element method (FEM).

Hereinafter, a specific procedure of calculating the curve 612, which represents a probability distribution relating to a defect condition after the elapse of time t, will be described. In general, it may be considered that a defect D grows in accordance with the following equation (1) with respect to a repeated stress.

[Math. 1]

$$\frac{da}{dt} = f(a|\alpha,\ \beta,\ \gamma,\ \cdots)$$

$$\cdots\ (1)$$

In the equation (1), "a" represents a defect size, "t" represents an elapsed time, and "α", "β", "γ", ... represent defect conditions other than the defect size. A growth rate function "f" represents a growth rate of the defect D. The growth rate function "f" may be obtained by a calculation approach such as a finite element method.

The growth rate function "f" of the defect D has uncertainty with respect to parameters, and, probabilistically, a stochastic differential equation expressed by the following equation (2) corresponds.

$$da = \mu(a,t)dt + \sigma(a,t)dW_t$$

$$\dots\ (2)$$

In the equation (2), $\mu(a,t)$ represents an average value of the right side of the equation (1). In addition, $\sigma(a,t)$ represents a standard deviation of the right side of the equation (1), and $W_t$ represents a standard Wiener process.

In the case where the change in the defect size follows the equation (2), a temporal change of the defect condition probability distribution 611 ("p") relating to the defect size is represented by a Fokker-Planck equation. In a case where the Ito integral is used, the Fokker-Planck equation is expressed by the following equation (3).

[Math. 2]

$$\frac{\partial p(a,t)}{\partial t} = -\frac{\partial}{\partial a}[\mu(a,t)p(a,t)] + \frac{1}{2}\frac{\partial^2}{\partial a^2}[\sigma(a,t)^2 p(a,t)]$$

$$\dots\ (3)$$

In a case where the Stratonovich integral is used, the Fokker-Planck equation is expressed by the following equation (4).

[Math. 3]

$$\frac{\partial p(a,t)}{\partial t}$$

$$= -\frac{\partial}{\partial a}[\mu(a,t)p(a,t)] - \frac{1}{2}\frac{\partial}{\partial a}\left[\frac{\partial \sigma(a,t)}{\partial a}\sigma(a,t)p(a,t)\right]$$

$$+ \frac{1}{2}\frac{\partial^2}{\partial a^2}[\sigma(a,t)^2 p(a,t)]$$

$$\qquad \qquad \dots (4)$$

In the present embodiment, any of these integration methods may be used. Note that in the Fokker-Planck equation, the random variables (the defect conditions) need to be continuous random variables.

The remaining service life predicting unit 105 calculates the probability distribution relating to the defect size after the elapse of time t (the curve 612) by using the equation (3) or the equation (4). The remaining service life predicting unit 105 calculates a probability distribution relating to the defect size after the elapse of time t (the curve 612) by a numerical calculation based on the equation (3) or the equation (4). In this way, the remaining service life predicting unit 105 calculates a temporal change of the probability density that relates to a defect condition and is estimated by the probability distribution estimating unit 104. The calculated probability distribution relating to the defect size after the elapse of time t (the curve 612) is a probability distribution relating to the defect condition after a predetermined period of time. Particularly, in the first embodiment, the remaining service life predicting unit 105 analytically calculates the probability distribution over time (the curve 612) by solving the Fokker-Planck equation. At this time, the defect condition probability distribution 611 (see FIG. 9) or the multi-dimensional defect condition probability distribution 611A (see FIG. 10) estimated by the probability distribution estimating unit 104 is set as an initial distribution.

An area of a region 631 surrounded by the curve 612 and the curve 621 in FIG. 11 represents the fracture probability of the inspection target T after the elapse of time t. The remaining service life predicting unit 105 compares the tolerable risk and the fracture probability after the elapse of time t, and calculates, as a remaining service life, time t at which the fracture probability after the elapse of time t satisfies a predetermined condition with respect to the tolerable risk. The predetermined condition is any of the following two.

(B1) The fracture probability after the elapse of time t becomes larger than the tolerable risk.

(B2) The fracture probability after the elapse of time t falls within a range of the tolerable risk $\pm\delta$ ($\delta$ is a predetermined value).

The remaining service life predicting unit 105 determines a maintenance timing and a repair timing by using the calculated remaining service life of the defect D. Note that the remaining service life may be calculated for each of a plurality of defects D. In this case, the remaining service life predicting unit 105 determines a maintenance timing and a repair timing by using the calculated remaining service lives of a plurality of portions. For example, the remaining service life predicting unit 105 determines a maintenance timing and a repair timing based on the shortest remaining service life among the remaining service lives of the plurality of portions.

In this way, the remaining service life predicting unit 105 estimates, as a remaining service life (predicts a remaining service life), time at which an overlapping part of the probability distribution relating to the defect condition after a predetermined period of time and a predetermined fracture probability distribution of an inspection target T satisfies a predetermined condition. Here, the probability distribution relating to the defect condition after a predetermined period of time is the curve 612 of FIG. 11. In addition, the predetermined fracture probability distribution of the inspection target T is the curve 621 of FIG. 11. Then, the overlapping part of the predetermined fracture probability distribution of the inspection target T is the region 631 of FIG. 11.

In FIG. 11, the remaining service life prediction processing is performed on the defect size. However, as described above, the defect condition probability distribution 611 is actually a multi-dimensional defect condition probability distribution 611A including a plurality of defect conditions as random variables as shown in FIG. 10. Hence, the curve 612 and the curve 621 shown in FIG. 11 also become a multi-dimensional probability distribution including the same random variables as those of the multi-dimensional defect condition probability distribution 611A. Then, the remaining service life predicting unit 105 calculates a multi-dimensional probability distribution corresponding to the curve 612 after the elapse of time t for random variables (a defect size, a defect direction, or the like) that affect a breakage among these random variables. Then, the remaining service life predicting unit 105 calculates, as a remaining service life, time t at which a volume of a manifold region (the region 631) surrounded by a multi-dimensional probability distribution corresponding to the curve 612 and a multi-dimensional probability distribution corresponding to the curve 621 satisfies a predetermined condition.

(Flowchart)

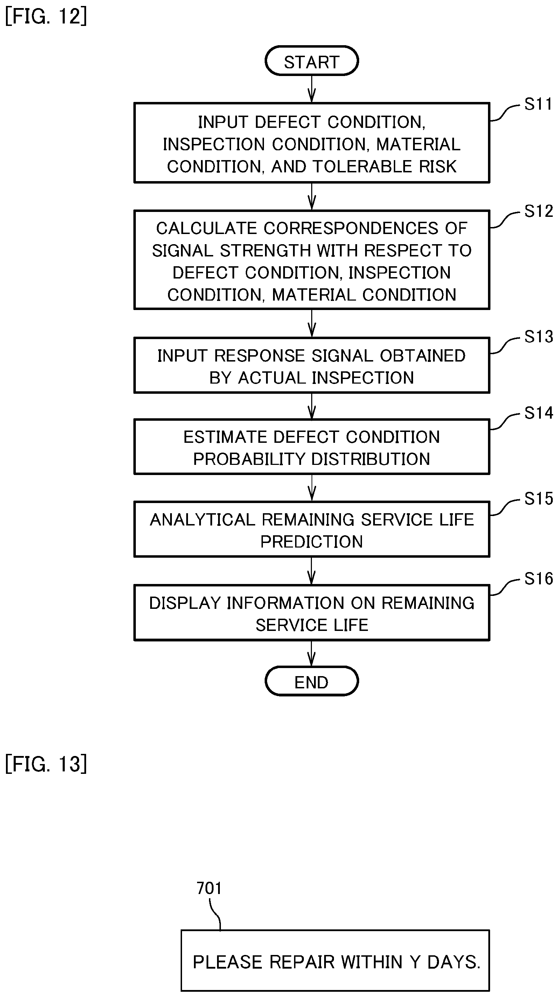

Lastly, a procedure of the remaining service life predicting method according to the first embodiment will be described by using FIG. 12.

FIG. 12 is a flowchart showing the procedure of the remaining service life predicting method according to the first embodiment. FIG. 1 to FIG. 11 are referred to as appropriate.

First, in step S11, a defect condition, an inspection condition, a material condition, and a tolerable risk, which is a tolerable failure probability, are inputted into the condition input unit 101. Step S11 corresponds to FIG. 3. As described above, the defect condition, the inspection condition, and the material condition are input as probability distributions relating to the respective items of variability.

Next, in step S12, the simulation processing unit 102 calculates correspondences of a signal strength with respect to the defect condition, the inspection condition, and the material condition as a simulation step. The processing of step S12 is the analysis by the simulation processing unit 102, which has been described with reference to FIG. 4A to FIG. 7C.

That is, in step S12, the simulation processing unit 102 calculates dependency of a signal strength for each defect size in correspondence with the inspection condition such as the placement position variability 201 of the ultrasonic sensor 121 and the material condition such as the acoustic velocity of the inspection target T. At this time, the simulation processing unit 102 uses physical simulation or a test database. As a result, the graph 321 shown in FIG. 5 is obtained.

In step S13, a response signal 501 obtained by actual inspection is input into the response signal input unit 103. The processing of step S13 is the processing described with reference to FIG. 8. In step S13, feature amounts, such as a defect detection signal 511 and a defect detection time 512, corresponding to a defect condition are extracted through signal processing.

In step S14, the probability distribution estimating unit 104 estimates a defect condition probability distribution 611 as a probability distribution estimating step. Step S14 is the processing described with reference to FIG. 9 and FIG. 10. The probability distribution estimating unit 104 estimates the defect condition probability distribution 611 based on the defect condition, more specifically, a defect direction, a defect size, a shape, or the like, and a defect detection signal strength 513 of the defect detection signal 511. In step S14, first, the probability distribution estimating unit 104 presumes a distribution shape of the defect condition probability distribution 611 such as that shown in FIG. 9 with respect to the result of analysis in step S12. Then, the probability distribution estimating unit 104 fits parameters in such a manner as to best reproduce plot points 601 shown in FIG. 9 by a maximum likelihood estimation method or the like. Alternatively, the probability distribution estimating unit 104 converts results of the plot points 601 to a histogram to calculate the defect condition probability distribution 611 as an empirical distribution. Note that the defect condition probability distribution 611 estimated in step S14 is actually the multi-dimensional defect condition probability distribution 611A shown in FIG. 10.

The defect condition probability distribution 611, which is the result calculated in step S14, includes the following properties. When the example shown in FIG. 9 is referred to, an average of the random variable indicated by the plot points 601 on (or near) the horizontal dashed line 603 and an average of the random variable of the defect condition probability distribution 611 coincide with each other. Further, the defect condition probability distribution 611 (the multi-dimensional defect condition probability distribution 611A), which is the result calculated in step S14, has a spread of distribution corresponding to the defect condition. In step S15, the remaining service life predicting unit 105 calculates growth of the defect D and evaluates a risk based on the defect condition probability distribution 611 obtained in this way.

In step S15, the remaining service life predicting unit 105 executes analytical remaining service life prediction as a remaining service life predicting step. Step S15 is the processing described with reference to FIG. 11. As mentioned in the description of the remaining service life predicting unit 105 using FIG. 11, the Fokker-Planck equation corresponding to an inspection system is used with the defect condition probability distribution 611 as an initial distribution. In this way, the remaining service life predicting unit 105 calculates a probability distribution of the defect size after the elapse of time t (in the example shown in FIG. 11, the curve 612) by using the defect condition probability distribution 611 estimated by the probability distribution estimating unit 104 as an initial distribution. Further, the remaining service life predicting unit 105 calculates, in advance, a fracture probability of the inspection target T with respect to a defect size "a" (the curve 612) by a calculation approach such as the FEM in FIG. 11. Note that term "analytical" means analytically obtaining a probability distribution relating to the defect size after the elapse of time t (the curve 612) by using the Fokker-Planck equation.

As described above, the remaining service life predicting unit 105 calculates a fracture probability of the inspection target T after the elapse of time t by calculating an area of the region 631 surrounded by the curve 612 and the curve 621 in FIG. 11. Note that in the case where the defect condition probability distribution 611 is the multi-dimensional defect condition probability distribution 611A, the above-described area is replaced with a volume of a manifold region surrounded by a multi-dimensional probability distribution corresponding to the curve 612 and a multi-dimensional probability distribution corresponding to the curve 621 as described above. Then, as described above, the remaining service life predicting unit 105 compares the tolerable risk and the fracture probability after the elapse of time t, and calculates time "t" which satisfies a predetermined condition as a remaining service life. The predetermined condition is any of (B1) or (B2) described in the description of FIG. 11.

In step S16, the remaining service life predicting unit 105 displays, on the output device 115, information on the calculated (estimated) remaining service life as a remaining service life predicting step. In this way, the calculated remaining service life is presented to the user. The user determines a maintenance timing and a repair timing by using the calculated remaining service lives of a plurality of portions.

(Example of Display Screen)

FIG. 13 is a diagram showing an example of a display screen displayed in step S16 of FIG. 12.

In a display screen 701, a display to prompt repair within Y days as information on the remaining service life is made. The value of "Y" is a value calculated based on time "t" that satisfies the predetermined condition and is calculated in step S15 of FIG. 12.

This enables appropriate remaining service life prediction that takes into consideration an inspection condition and a defect condition, and makes it possible to rationalize a maintenance timing and a repair timing. As a result of this, it becomes possible to perform remaining service life prediction with high accuracy.

Further, in the first embodiment, the remaining service life predicting unit 105 calculates a probability distribution after the elapse of time t (the curve 612 in FIG. 11) by analytically solving the Fokker-Planck equation. In this way, a probability distribution after the elapse of time t (the curve 612) may accurately be calculated.

Further, when the defect condition probability distribution 611 shown in FIG. 9 or the multi-dimensional defect condition probability distribution 611A shown in FIG. 10 is calculated, the probability distribution estimating unit 104 uses the plot points 601 as a prior distribution. The probability distribution estimating unit 104 performs the Bayesian inference using the defect detection signal strength 513 as data. In this way, the defect condition probability distribution 611 or the multi-dimensional defect condition probability distribution 611A may be calculated probabilistically.

Further, in the first embodiment, as shown in FIG. 3, the position variability 201 of the ultrasonic sensor 121 and the transmission direction variability 202 of the ultrasonic wave are set as the inspection conditions. Further, as shown in FIG. 6A to FIG. 6C, the defect size variability 211, the defect direction variability 212, and the defect position variability 213 are set as the defect conditions. Further, the defect shape is included in the defect conditions. This enables remaining service life prediction to be performed that takes into consideration actual variability in the inspection or the defect D that may occur.

[Second Embodiment]

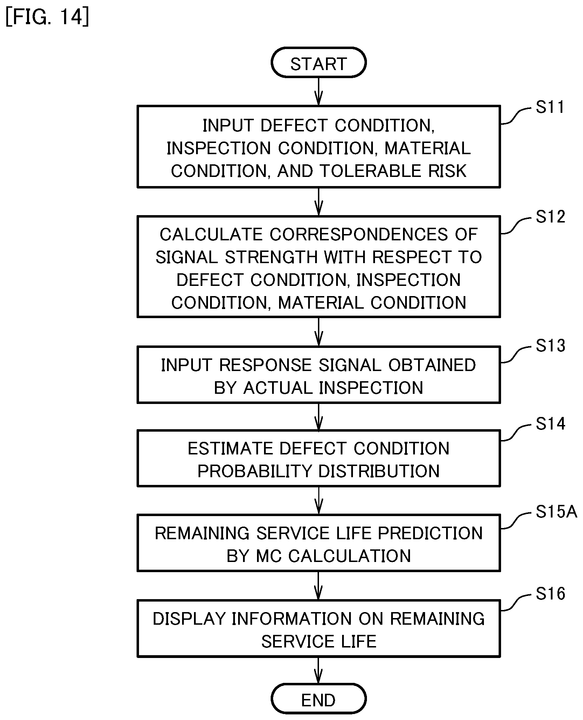

FIG. 14 is a flowchart showing a procedure of a remaining service life predicting method according to a second embodiment.

In the first embodiment, the curve 612 (see FIG. 11) corresponding to the probability distribution after time t is calculated by analytically solving the Fokker-Planck equation in step S15 of FIG. 12. In contrast, in the second embodiment, the remaining service life predicting unit 105 executes remaining service life prediction through the Monte Carlo (MC) calculation in step S15A of FIG. 14.

That is, in step S15A of FIG. 14, the remaining service life predicting unit 105 executes Monte Carlo calculation in place of the calculation of the Fokker-Planck equation. This makes it possible to probabilistically predict remaining service life. More specifically, the following processing is performed. First, the number of samplings of the Monte Carlo calculation is input into the remaining service life predicting unit 105. Then, the remaining service life predicting unit 105 randomly samples defect conditions ($\alpha$, $\beta$, $\gamma$, ... of the equation [1]) in accordance with a probability distribution obtained by the probability distribution estimating unit 104. The probability distribution obtained by the probability distribution estimating unit 104 is the defect condition probability distribution 611 (see FIG. 9) or the multi-dimensional defect condition probability distribution 611A (see FIG. 10).

Subsequently, the remaining service life predicting unit 105 randomly samples a growth rate of the defect D in accordance with the probability distribution (normally, a normal distribution of an average "$\mu(a,t)$" and a standard deviation "$\sigma(a,t)$" ["a" is a defect size, and "t" is time]). Then, the remaining service life predicting unit 105 calculates a defect size after time $\Delta t$ based on the randomly sampled growth rate of the defect D.

The remaining service life predicting unit 105 repeats this calculation to obtain a curve 612 (see FIG. 11) that represents the probability distribution of the defect size after the elapse of time t. Then, the remaining service life predicting unit 105 compares the tolerable risk and a fracture probability after the elapse of time t, and calculates time t that satisfies a predetermined condition as a remaining service life. The predetermined condition is any of (B1) or (B2) described in the description of FIG. 11.

In this way, in the second embodiment, a probability distribution over time is calculated through the Monte Carlo calculation by repeating the random sampling on the defect conditions from an initial distribution. At this time, the probability distribution (the defect condition probability distribution 611 [see FIG. 9] or the multi-dimensional defect condition probability distribution 611A [see FIG. 10]) estimated by the probability distribution estimating unit 104 is set as the initial distribution.

In step S16, the remaining service life predicting unit 105 displays the calculated remaining service life on the output device 115. Note that the remaining service life may be calculated for each of a plurality of defects D. In this case, the remaining service life predicting unit 105 determines a maintenance timing and a repair timing by using the calculated remaining service lives of a plurality of portions. For example, the remaining service life predicting unit 105 determines the maintenance timing and the repair timing based on the shortest remaining service life among the remaining service lives of the plurality of portions. Note that the processing of step S16 is the same processing as in the first embodiment.

Note that in the Fokker-Planck equation in the first embodiment, the random variables need to be continuous random variables as described above. In contrast, in the Monte Carlo calculation of the second embodiment the random variables may be continuous or may be discrete.

According to the second embodiment, the probability distribution after the elapse of time t (the curve 612 of FIG. 11) is not analytically calculated as in the first embodiment, but is calculated through simulation using the Monte Carlo calculation. In this way, the probability distribution after the elapse of time t (the curve 612) may be calculated even without an advanced mathematical knowledge.

The technology described in the present embodiments may be applied to a service for maintaining an inspection target T and a service for supporting operation plans for a plant.

Note that the present invention is not limited to the above-described embodiments, and encompasses various modifications. For example, although the above-described embodiments are described in detail to explain the present invention in an easily understandable manner, the present invention is not necessarily limited to embodiments that include all of the configuration described above. Further, it is possible to replace part of a configuration of a certain embodiment with a configuration of another embodiment. It is also possible to add a configuration of another embodiment to a configuration of a certain embodiment. Further, it is possible to make addition, deletion, or replacement of another configuration for part of a configuration of each embodiment.

Any of the above-mentioned configurations, functions, processing units, processing means, or the like may be implemented by means of hardware, in whole or in part, by designing an integrated circuit, for example. Any of the above-mentioned configurations, functions, or the like may be realized in software by using a processor to interpret and execute a program for implementing the respective function. Information such as a program, table, or file for implementing a function may be stored in a storage device, such as the memory 111, a hard disk, or a solid state drive (SSD), or in a non-transitory storage medium, such as an IC card, an SD card, or a DVD.

Only control lines and information lines assumed necessary for the explanation are shown, and not all control lines and information lines in a product are necessarily shown. It may be considered that almost all of the configurations are actually connected to one another.

Reference Signs List

1 Remaining service life predicting device
101 Condition input unit
102 Simulation processing unit
103 Response signal input unit
104 Probability distribution estimating unit
105 Remaining service life predicting unit
115 Output device (output unit)
121 Ultrasonic sensor
121M Ultrasonic sensor model
201 Placement position variability (variability of a placement position of the ultrasonic sensor, an inspection condition)
202 Transmission direction variability (variability of a transmission direction of an ultrasonic wave, an inspection condition)
211 Defect size variability (variability of a size of a defect, a defect condition, continuous random variable)
212 Defect direction variability (variability of a defect position, a defect condition, continuous random variable)
213 Defect position variability (variability of a defect direction, a defect condition, continuous random variable)
321 Graph
401 Inspection target model

501 Response signal
511 Defect detection signal
513 Defect detection signal strength (actual signal strength)
600 Graph
601 Plot point (result of analysis by the simulation processing unit, signal strength corresponding to an inspection condition and a defect condition)
603 Horizontal dashed line (corresponding to actual signal strength)
611 Defect condition probability distribution (probability distribution relating to a defect condition)
611A Defect condition probability distribution (probability distribution relating to defect conditions)
612 Curve (probability distribution relating to the defect condition after a predetermined period of time)
621 Curve (fracture probability distribution)
631 Region (overlapping part)
D Defect
DM Defect model
DMa Defect model (variability of a defect shape, a defect condition)
DMb Defect model (variability of a defect shape, a defect condition)
DMc Defect model (variability of a defect shape, a defect condition)
T Inspection target
S12 Calculate correspondence of signal strength with respect to defect condition, inspection condition, material condition (simulation step)
S14 Estimate defect condition probability distribution (probability distribution estimating step)
S15 Analytical remaining service life prediction (remaining service life predicting step)
S16 Display information on remaining service life (remaining service life predicting step)

**Claims**

1. A remaining service life predicting device comprising:

   a simulation processing unit configured to simulate a signal strength with respect to an inspection condition that may be a cause of variability of a defect detection signal by non-destructive inspection and a defect condition that is a condition of a defect that is a target of the non-destructive inspection;
   a probability distribution estimating unit configured to estimate, based on a result of analysis by the simulation processing unit and an actual signal strength that is a signal strength of a response signal obtained by actual inspection, a probability distribution relating to the defect condition estimated from the actual signal strength; and
   a remaining service life predicting unit configured to: calculate a temporal change of the probability distribution relating to the defect condition estimated by the probability distribution estimating unit; estimate, as a remaining service life, time at which an overlapping part of the probability distribution relating to the defect condition after a predetermined period of time and a predetermined fracture probability distribution of an inspection target satisfies a predetermined condition; and output the estimated remaining service life to an output unit.

2. The remaining service life predicting device according to claim 1, wherein

   an ultrasonic sensor is used in the non-destructive inspection, and
   the inspection condition includes at least one of variability of a placement position of the ultrasonic sensor or variability of a transmission direction of an ultrasonic wave.

3. The remaining service life predicting device according to claim 1, wherein
   the defect condition includes variability of a size of the defect, and also includes at least one of variability of a defect position, variability of a defect direction, or variability of a defect shape.

4. The remaining service life predicting device according to claim 1, wherein

   the simulation processing unit is configured to execute physical simulation to calculate a signal strength corresponding to the inspection condition and the defect condition, and
   the probability distribution estimating unit is configured to estimate the probability distribution relating to the defect condition by a Bayesian inference based on a result of the physical simulation and an inputted signal strength that has been obtained by the actual inspection.

5. The remaining service life predicting device according to claim 1, wherein

   the defect condition is a continuous random variable, and
   the remaining service life predicting unit is configured to analytically calculate a probability distribution over time by solving a Fokker-Planck equation using, as an initial distribution, the probability distribution relating to the inspection condition estimated by the probability distribution estimating unit.

6. The remaining service life predicting device according to claim 1, wherein
   the remaining service life predicting unit is configured to calculate a probability distribution over time through Monte Carlo calculation by repeating random sampling on the defect condition from an initial distribution, using a probability distribution estimated by the probability distribution estimating unit as the initial distribution.

7. A remaining service life predicting method for causing a remaining service life predicting device that predicts a remaining service life of an inspection target to perform:

   a simulation step of simulating a signal strength with respect to an inspection condition that may be a cause of variability of a defect detection signal by non-destructive inspection and a defect condition that is a condition of a defect that is a target of the non-destructive inspection and that is generated in the inspection target;
   a probability distribution estimating step of estimating, based on a result of analysis by the simulation step and an actual signal strength that is a signal strength of a response signal obtained by actual inspection, a probability distribution relating to the defect condition estimated from the actual signal strength; and
   a remaining service life predicting step of: calculating a temporal change of the probability distribution relating to the defect condition estimated by the probability distribution estimating step; estimating, as a remaining service life, time at which an overlapping part of the probability distribution relating to the defect condition after a predetermined period of time and a predetermined fracture probability distribution of the inspection target satisfies a predetermined condition; and outputting the estimated remaining service life to an output unit.

[FIG. 1]

```
          ┌─── 101
   ┌──────────────────┐
   │ CONDITION INPUT  │
   │      UNIT        │
   └──────────────────┘
            │    ┌─── 102
            ▼
   ┌──────────────────┐
   │   SIMULATION     │
   │   PROCESSING     │
   │      UNIT        │
   └──────────────────┘
```

                                              ┌─── 103
                                     ┌──────────────────┐
                                     │    RESPONSE      │
                                     │  SIGNAL INPUT    │
                                     │      UNIT        │
                                     └──────────────────┘

                   ┌─── 104
          ┌──────────────────────┐
          │     PROBABILITY      │
          │    DISTRIBUTION      │
          │  ESTIMATING UNIT     │
          └──────────────────────┘
                      │    ┌─── 105
                                              1
                      ▼
          ┌──────────────────────┐
          │     REMAINING        │
          │   SERVICE LIFE       │
          │  PREDICTING UNIT     │
          └──────────────────────┘

[FIG. 2]

                                                          ┌─── 1
┌──────────────────────────────────────────────────────────────────┐
│           REMAINING SERVICE LIFE PREDICTING DEVICE                 │
│                                                                    │
│      ┌─── 114                              ┌─── 112                │
│   ┌──────────────────┐              ┌──────────────────┐           │
│   │   INPUT DEVICE   │              │   COMPUTATION    │           │
│   └──────────────────┘              │     DEVICE       │           │
│                                     └──────────────────┘           │
│      ┌─── 115              ┌─── 111                                │
│   ┌──────────────────┐  ┌──────────┐                               │
│   │  OUTPUT DEVICE   │──│  MEMORY  │                               │
│   └──────────────────┘  └──────────┘                               │
│                                              ┌─── 113              │
│      ┌─── 116                             ┌────────────┐           │
│   ┌──────────────────┐                    │            │          │
│   │  COMMUNICATION   │                    │  STORAGE   │          │
│   │     DEVICE       │                    └────────────┘           │
│   └──────────────────┘                                             │
└──────────────────────────────────────────────────────────────────┘

[FIG. 3]

[FIG. 4A]

[FIG. 4B]

[FIG. 5]

[FIG. 6A]

DM,DMa

- - - 212

211

213

401

121M

[FIG. 6B]

DM,DMb

211

213

401

121M

[FIG. 6C]

D,Dc

- - - 212

213

401

211

121M

[FIG. 7A]

311b

DM,DMa

[FIG. 7B]

311b

DM,DMb

[FIG. 7C]

311b

DM,DMc

[FIG. 8]

[FIG. 9]

DEFECT SIZE

[FIG. 10]

[FIG. 11]

[FIG. 12]

```
                    ┌──────────┐
                    │  START   │
                    └──────────┘
                         │
                         ▼
    ┌─────────────────────────────────────┐      S11
    │      INPUT DEFECT CONDITION,        │
    │  INSPECTION CONDITION, MATERIAL     │
    │   CONDITION, AND TOLERABLE RISK     │
    └─────────────────────────────────────┘
                         │
                         ▼
    ┌─────────────────────────────────────┐      S12
    │  CALCULATE CORRESPONDENCES OF       │
    │  SIGNAL STRENGTH WITH RESPECT TO    │
    │   DEFECT CONDITION, INSPECTION      │
    │   CONDITION, MATERIAL CONDITION     │
    └─────────────────────────────────────┘
                         │
                         ▼
    ┌─────────────────────────────────────┐      S13
    │   INPUT RESPONSE SIGNAL OBTAINED    │
    │        BY ACTUAL INSPECTION         │
    └─────────────────────────────────────┘
                         │
                         ▼
    ┌─────────────────────────────────────┐      S14
    │     ESTIMATE DEFECT CONDITION       │
    │      PROBABILITY DISTRIBUTION       │
    └─────────────────────────────────────┘
                         │
                         ▼
    ┌─────────────────────────────────────┐      S15
    │  ANALYTICAL REMAINING SERVICE LIFE  │
    │            PREDICTION               │
    └─────────────────────────────────────┘
                         │
                         ▼
    ┌─────────────────────────────────────┐      S16
    │   DISPLAY INFORMATION ON REMAINING  │
    │            SERVICE LIFE             │
    └─────────────────────────────────────┘
                         │
                         ▼
                    ┌──────────┐
                    │   END    │
                    └──────────┘
```

[FIG. 13]

701

┌─────────────────────────────────────┐
│  PLEASE REPAIR WITHIN Y DAYS.       │
└─────────────────────────────────────┘

[FIG. 14]

START

↓

INPUT DEFECT CONDITION, INSPECTION CONDITION, MATERIAL CONDITION, AND TOLERABLE RISK — S11

↓

CALCULATE CORRESPONDENCES OF SIGNAL STRENGTH WITH RESPECT TO DEFECT CONDITION, INSPECTION CONDITION, MATERIAL CONDITION — S12

↓

INPUT RESPONSE SIGNAL OBTAINED BY ACTUAL INSPECTION — S13

↓

ESTIMATE DEFECT CONDITION PROBABILITY DISTRIBUTION — S14

↓

REMAINING SERVICE LIFE PREDICTION BY MC CALCULATION — S15A

↓

DISPLAY INFORMATION ON REMAINING SERVICE LIFE — S16

↓

END

## INTERNATIONAL SEARCH REPORT

| International application No. |
| --- |
| **PCT/JP2024/022857** |

**A. CLASSIFICATION OF SUBJECT MATTER**

*G01N 29/48*(2006.01)i; *G01M 99/00*(2011.01)i
FI: G01N29/48; G01M99/00 Z

According to International Patent Classification (IPC) or to both national classification and IPC

**B. FIELDS SEARCHED**

Minimum documentation searched (classification system followed by classification symbols)

G01N29/00-G01N29/52; G01M13/00; G01M99/00; G01N3/00-G01N3/62; G01N23/00-G01N23/2276

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580 (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2020-186967 A (KABUSHIKI KAISHA TOSHIBA) 19 November 2020 (2020-11-19)<br>entire text, all drawings | 1–7 |
| A | JP 6-94589 A (KABUSHIKI KAISHA TOSHIBA) 05 April 1994 (1994-04-05)<br>entire text, all drawings | 1–7 |
| A | JP 61-139743 A (HITACHI, LTD.) 27 June 1986 (1986-06-27)<br>entire text, all drawings | 1–7 |
| A | 岩﨑　篤、吉永　博行, ベイズ統計を用いた回帰計数分布の更新による損傷同定モデルの高精度化, 日本機械学会論文集A編, 2011, vol. 77, no. 783, pp. 1934-1944 (IWASAKI, Atsushi, YOSHINAGA, Hiroyuki, Improvement of the Damage Identification Modeling by Implementation of the Update of the Regression Coefficient Distribution Using Bayesian Statistics, Transactions of the JSME (A))<br>entire text, all drawings | 1-7 |

☐ Further documents are listed in the continuation of Box C.　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 July 2024** | **13 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/022857**

| Patent document cited in search report | | | Publication date (day/month/year) | Patent family member(s) | Publication date (day/month/year) |
|---|---|---|---|---|---|
| JP | 2020-186967 | A | 19 November 2020 | (Family: none) | |
| JP | 6-94589 | A | 05 April 1994 | (Family: none) | |
| JP | 61-139743 | A | 27 June 1986 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7125266 B
- JP 2015512526 A